# EUROPEAN PATENT APPLICATION

(11) **EP 2 508 930 A1**
(43) Date of publication of application: **10.10.2012**
(21) Application number: 10834635.4
(22) Date of filing: 03.12.2010
(51) Int. Cl.: G02B 21/22, G02B 15/167, G02B 21/02

(54) **IMAGE FORMING OPTICAL SYSTEM AND MICROSCOPE DEVICE**

(30) Priority: 04.12.2009 JP 2009276078
(71) Applicant: Nikon Corporation, Tokyo 100-8331 (JP)
(72) Inventor: Mizuta Masahiro, Tokyo 100-8331 (JP)
(74) Representative: Whitlock, Holly Elizabeth Ann
(86) International application number: PCT/JP2010/071642
(87) International publication number: WO 2011/068185

(57) **Abstract**

Provided are an imaging optical system that is capable of arranging right and left optical systems parallel to each other while maintaining advantages of an inwardly inclined system stereoscopic microscope apparatus including right-eye and left-eye optical paths completely independent of each other, as well as a microscope apparatus including the imaging optical system. Imaging optical systems 10R and 10L respectively include variable power optical systems 11R and 11L formed of a plurality of lens groups, form images of an object O arranged at a position outside of optical axes of the variable power optical systems 11R and 11L, onto the optical axes, and variably magnify the images. The Imaging optical systems 10R and 10L each include a plurality of lens groups. At least one lens group of the plurality of lens groups is arranged such that a center thereof deviates by a predetermined amount in a direction perpendicular to the optical axis, and a second lens group G2 of each of the variable power optical systems 11R and 11L is moved in a direction including a component perpendicular to a reference optical axis A, in at least part of a power changing section from a high-power end state to a low-power end state.

## Description

### Technical Field

The present invention relates to an imaging optical system and a microscope apparatus.

### Background Art

The use of a stereoscopic microscope apparatus as an example of microscope apparatuses enables stereoscopic observation of an object having protrusions and recesses as if the object were viewed with both eyes. Hence, in the case of an operation under the microscope, a distance relation between a tool such as tweezers and the object can be easily known. Accordingly, the stereoscopic microscope apparatus is particularly beneficial in fields that require delicate treatment, such as precision machinery industry, biological dissection, and surgery. In such a stereoscopic microscope apparatus, in order to obtain a parallax, optical systems of luminous fluxes that respectively enter two right and left eyes are at least partially independent of each other such that the optical axes of the luminous fluxes intersect with each other on the object surface. Then, enlarged images of the object viewed in different directions are formed to be observed through eyepieces, thus enabling stereoscopic vision of the microscopic object.

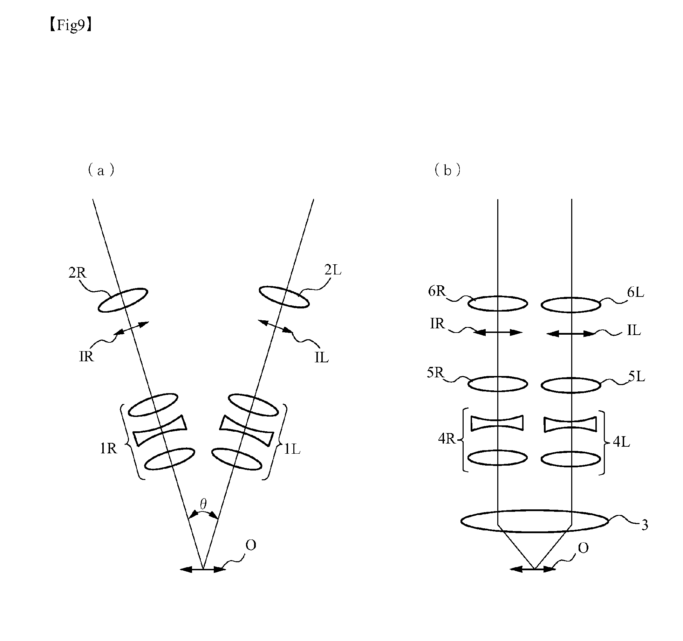

Such stereoscopic microscope apparatuses are roughly categorized into two types of an inwardly inclined system stereoscopic microscope apparatus and a parallel stereoscopic microscope apparatus, depending on a method of obtaining stereoscopic vision. With regard to optical systems of the inwardly inclined system stereoscopic microscope apparatus, as illustrated in Figure 9(a), a right-eye optical system and a left-eye optical system are provided independently of each other, and the two optical systems are arranged so as to be inclined by a predetermined angle θ. In this inwardly inclined system stereoscopic microscope apparatus, light emitted from an object O is imaged as images IR and IL by imaging lenses (normally, zoom variable power lenses) 1R and 1L. Then, the images IR and IL are enlarged by eyepieces 2R and 2L to be observed with naked eyes (not illustrated). In contrast, with regard to optical systems of the parallel stereoscopic microscope apparatus, as illustrated in Figure 9(b), luminous fluxes emitted from an object O pass through an objective lens 3 common to both right and left eyes, and then are imaged as images IR and IL by afocal variable power lenses (normally, zoom variable power lenses) 4R and 4L and imaging lenses 5R and 5L. Then, the images IR and IL are enlarged by eyepieces 6R and 6L to be observed with naked eyes (not illustrated). In the case where the magnifying power of the parallel stereoscopic microscope apparatus is changed, a plurality of common objective lenses having different focal lengths are prepared, and an objective lens having a necessary focal length is selected for replacement, whereby the magnifying power is changed.

As described above, the inwardly inclined system stereoscopic microscope apparatus has the simple optical systems, and hence the size and weight of the body thereof can reduced. Meanwhile, the imaging optical systems are arranged so as to be inclined with respect to the object to be observed, and hence the variable power mechanical structure of the variable power optical systems is unfavorably complicated. In addition, at the time of observation of a planar object and the like, a portion other than the center in the field of view is unfavorably out of focus. In contrast, in the parallel stereoscopic microscope apparatus, the optical axes of the right and left optical systems are arranged parallel to each other, and hence various intermediate apparatuses, such as a coaxial illumination apparatus and a teaching head apparatus, can be inserted for use in the parallel luminous flux portion. In addition, the entire field of view can be brought into focus, and hence pictures of the object to be observed can be suitably taken. Meanwhile, the configuration of the objective lens is complicated, and hence the size and costs of the apparatus are unfavorably increased. For these reasons, what is demanded is an inwardly inclined system stereoscopic microscope apparatus that has as high system extensibility as that of the parallel stereoscopic microscope apparatus and satisfies the optical performance of the entire field of view. For example, a method that has been proposed involves inserting a deflection angle prism into each of the right and left optical systems to thereby make, parallel to each other, the right and left optical axes in the inwardly inclined system stereoscopic microscope apparatus (see, for example, Patent Literature 1).

### Citation List

### Patent Literature

Patent Literature 1: Japanese Utility Model Laid-Open No.58-11711

### Summary of Invention

### Technical Problem

Unfortunately, the deflection angle prism causes a large aberration unless the deflection angle prism is inserted in a parallel luminous flux section. Accordingly, in order to make the right and left optical axes parallel to each other by means of the deflection angle prism alone in the inwardly inclined system stereoscopic microscope apparatus, the parallel section and an interval for inserting the prism need to be provided, resulting in a significant burden at the time of configuring each variable power optical system. As a result, there is a problem that the size of the optical system is increased, leading to an increase in costs.

The present invention has been made in view of the above-mentioned problem, and therefore has an object to provide an imaging optical system that is capable of arranging right and left optical systems parallel to each other while maintaining the advantages of the inwardly inclined system stereoscopic microscope apparatus including the right-eye and left-eye optical paths completely independent of each other, as well as a microscope apparatus including the imaging optical system.

### Solution to Problem

In order to solve the above-mentioned problem, the present invention provides an imaging optical system that forms an image of an object arranged at a position outside of an optical axis, onto the optical axis, and variably magnifies the image, the imaging optical system including a plurality of lens groups. At least one lens group of the plurality of lens groups is arranged such that a center thereof deviates by a predetermined amount in a direction perpendicular to the optical axis, and the at least one lens group moves in a direction including a component perpendicular to the optical axis, in at least part of a power changing section from a high-power end state to a low-power end state.

It is preferable that, in the above-mentioned imaging optical system, an optical axis of at least one lens group of the plurality of lens groups or an optical axis of at least one of lenses constituting the lens groups be inclined with respect to a normal to a surface of the object.

In addition, it is preferable that the above-mentioned imaging optical system further include a deflection angle prism. At this time, it is preferable that the deflection angle prism be a prism obtained by attaching two or more types of glass to each other.

The present invention also provides a microscope apparatus including two or more imaging optical systems that form images of an object viewed in different directions. At least one of the imaging optical systems is configured by the imaging optical system having any of the above-mentioned features.

It is preferable that, in the above-mentioned microscope apparatus, optical axes of the two or more imaging optical systems be arranged so as to be, at least partially, substantially parallel to each other.

In addition, it is preferable that, in the above-mentioned microscope apparatus, an objective lens common to the two or more imaging optical systems be attachable.

### Advantageous Effects of Invention

With the imaging optical system and the microscope apparatus configured as described above according to the present invention, it is possible to arrange the right and left optical systems parallel to each other while maintaining the advantages of the inwardly inclined system stereoscopic microscope apparatus including the right-eye and left-eye optical paths completely independent of each other.

### Brief Description of Drawings

[Figure 1] Figure 1 is a perspective view illustrating an external appearance of a stereoscopic microscope apparatus.
[Figures 2] Figures 2 are explanatory views each illustrating an imaging state of light emitted from an on-axis object in an imaging optical system including a conventional variable power optical system formed of four groups, Figure 2(a) illustrates a low-power end state, and Figure 2(b) illustrates a high-power end state.
[Figures 3] Figures 3 are explanatory views each illustrating an imaging state of light emitted from an off-axis object in the imaging optical system including the conventional variable power optical system, Figure 3(a) illustrates a low-power end state, and Figure 3(b) illustrates a high-power end state.
[Figures 4] Figures 4 are explanatory views each illustrating a configuration of an imaging optical system according to a first embodiment, Figure 4(a) illustrates a low-power end state, and Figure 4(b) illustrates a high-power end state.
[Figures 5] Figures 5 are explanatory views each illustrating a configuration of imaging optical systems of a stereoscopic microscope apparatus according to the first embodiment, Figure 5(a) illustrates a low-power end state, and Figure 5(b) illustrates a high-power end state.
[Figures 6] Figures 6 are explanatory views each illustrating a configuration of the imaging optical systems of the stereoscopic microscope apparatus according to the first embodiment, to which an illumination optical system is added, Figure 6(a) illustrates a low-power end state, and Figure 6(b) illustrates a high-power end state.
[Figures 7] Figures 7 are explanatory views each illustrating a configuration of imaging optical systems of a stereoscopic microscope apparatus according to a second embodiment, Figure 7(a) illustrates a low-power end state, and Figure 7(b) illustrates a high-power end state.
[Figures 8] Figures 8 are explanatory views each illustrating a configuration of imaging optical systems of a stereoscopic microscope apparatus according to a third embodiment, Figure 8(a) illustrates a low-power end state, and Figure 8(b) illustrates a high-power end state.
[Figures 9] Figures 9 are explanatory views for describing optical systems of a conventional stereoscopic microscope apparatus, Figure 9(a) illustrates a configuration of an inwardly inclined system stereoscopic microscope apparatus, and Figure 9(b) illustrates a configuration of a parallel stereoscopic microscope apparatus.
[Figures 10] Figures 10 are graphs in which a decentering trajectory of a second lens group G2 with respect to a reference optical axis A is plotted in a power changing section from the low-power end state to the high-power end state in the imaging optical systems according to the first embodiment to the third embodiment.

### Description of Embodiments

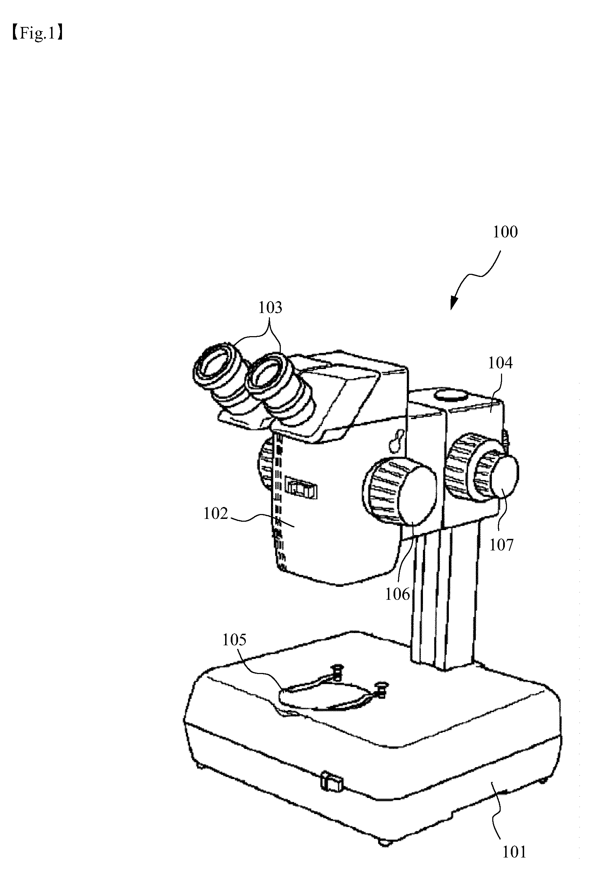

Hereinafter, preferred embodiments of the present invention are described with reference to the drawings. First, a configuration of a stereoscopic microscope apparatus as an example of microscope apparatuses is described with reference to Figure 1. A stereoscopic microscope apparatus 100 includes a base unit 101, a variable power lens barrel 102, a binocular lens barrel 103, and a focusing apparatus 104. A sample platform 105 is provided on an upper surface of the base unit 101, and a transparent member is embedded in the sample platform 105. In addition, a variable power optical system and an imaging lens for each of right and left eyes are provided inside of the variable power lens barrel 102 such that at least part of the optical axes thereof are substantially parallel to each other, and a variable power knob 106 is arranged outside of the lens barrel. The variable power optical system includes a plurality of movable lens groups for changing the magnifying power, and is moved by turning the variable power knob 106, in an optical axis direction in accordance with a predetermined amount of movement. In the case where an adjustable diaphragm is mounted in the variable power optical system, an adjustment mechanism of the adjustable diaphragm is provided in the variable power lens barrel. The focusing apparatus 104 includes: a focusing knob 107; and a mechanical unit (not illustrated) that axially moves the variable power lens barrel 102 up/down along with the turn of the focusing knob 107.

### [First Embodiment]

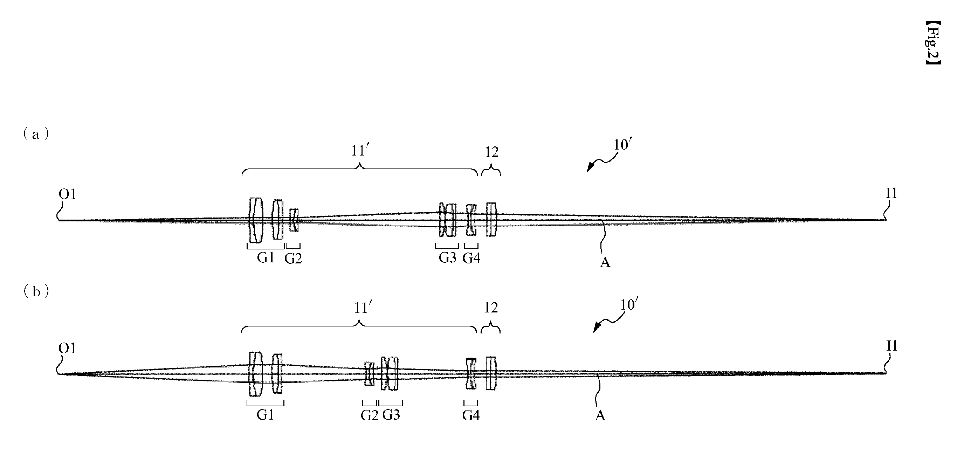

Now, description is given of a specific configuration of an imaging optical system according to the first embodiment, the imaging optical system being included in the stereoscopic microscope apparatus 100 described above. Figures 2 each illustrate an imaging optical system 10' including a variable power optical system 11' and an imaging lens 12, in which an object O1 to be observed and all lens groups of the imaging optical system 10' are arranged on the same optical axis (hereinafter, referred to as "reference optical axis A"). Here, the variable power optical system 11' has a typical configuration formed of four groups of: a first lens group G1 having a positive refractive power; a second lens group G2 having a negative refractive power; a third lens group G3 having a positive refractive power; and a fourth lens group G4 having a negative refractive power, in the stated order from the object O1 side. Light emitted from the fourth lens group G4 is a substantially parallel luminous flux. When the magnifying power of the variable power optical system 11' is changed from a low-power end state (Figure 2(a)) to a high-power end state (Figure 2(b)), the second lens group G2 moves in a fixed direction from the object side to the image side, and the third lens group G3 moves in a fixed direction from the image side to the object side. That is, the second lens group G2 and the third lens group G3 always move only in the fixed direction, and do not move in the reverse direction during a power changing operation. As is apparent from Figures 2, even when the second lens group G2 and the third lens group G3 constituting the variable power optical system 11' move on the optical axis to change the magnifying power, light emitted from the object O1 on the reference optical axis A is imaged as an image I1 on the reference optical axis A by the imaging lens 12.

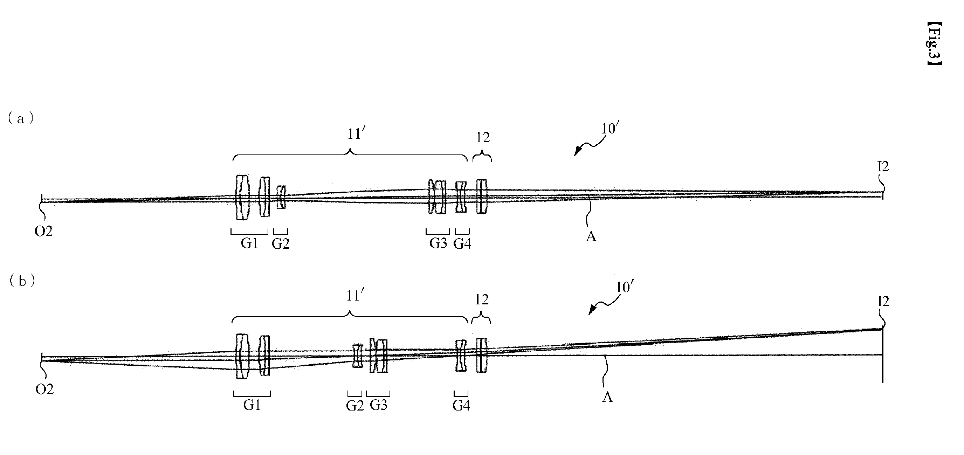

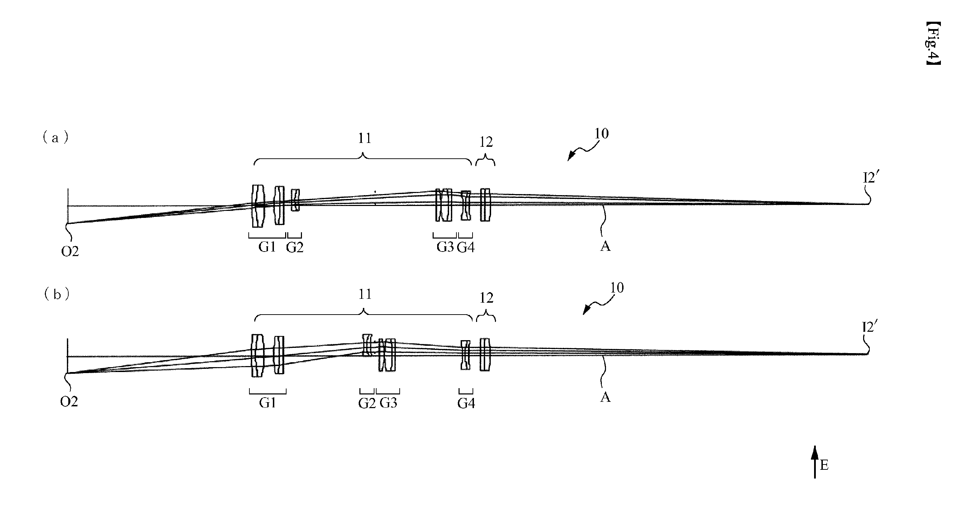

When the object to be observed is moved to an off-axis point 02 as illustrated in Figures 3, in the state where all the lens groups of the imaging optical system 10' are temporarily arranged on the same optical axis (on the reference optical axis A) as illustrated in Figures 2, an image I2 also moves out of the axis, and the amount of movement of the image I2 becomes larger along with an increase in magnifying power from the low-power end state (Figure 3(a)) to the high-power end state (Figure 3(b)). In order to correct the position of the image I2 onto the reference optical axis A (the optical axis of the first lens group G1), as illustrated in an imaging optical system 10 in Figures 4, the second lens group G2 of a variable power optical system 11 is moved in the direction perpendicular to the optical axis. At this time, similarly to the image, the amount of movement of the second lens group G2 is larger along with an increase in magnifying power from the low-power end state (Figure 4(a)) to the high-power end state (Figure 4(b)). As a result, a luminous flux emitted from the variable power optical system 11 can be made substantially parallel to the reference optical axis A. Note that the second lens group G2 is decentered here, but a similar effect can be obtained by decentering the third lens group G3.

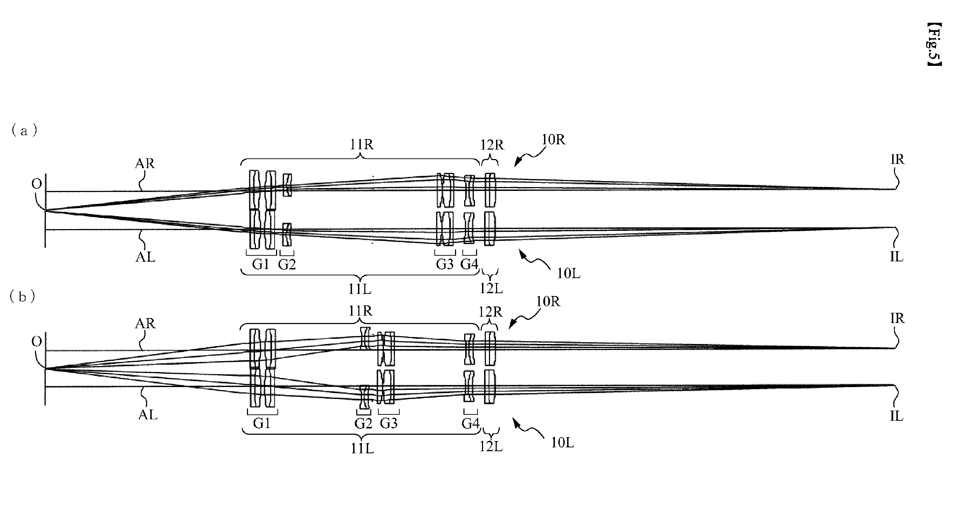

In the imaging optical system 10 as illustrated in Figures 4, the lens group (for example, the second lens group G2) that moves on the optical axis at the time of changing the magnifying power is moved in the direction including the component perpendicular to the optical axis, and an image of the off-axis object 02 is formed as an image I2' on the reference optical axis A regardless of the magnifying power. A plurality of such imaging optical systems 10 configured as described above are combined, whereby an object can be observed in different directions, thus enabling stereoscopic vision of the object. Figures 5 each illustrate an optical system of a stereoscopic microscope apparatus having a configuration in which: the imaging optical systems 10 are arranged side by side as a right-eye imaging optical system 10R and a left-eye imaging optical system 10L; and the object O located in substantially the middle of respective reference optical axes AR and AL thus can be observed in different directions (right and left directions) while the reference optical axes AR and AL are kept substantially parallel to each other. That is, in this stereoscopic microscope apparatus, in the state where the respective reference optical axes AR and AL of the right-and left-eye imaging optical systems 10R and 10L are arranged substantially parallel to each other, each optical axis to the object O can be inclined by a predetermined angle similarly to the optical systems of the inwardly inclined system stereoscopic microscope apparatus described with reference to Figure 9(a).

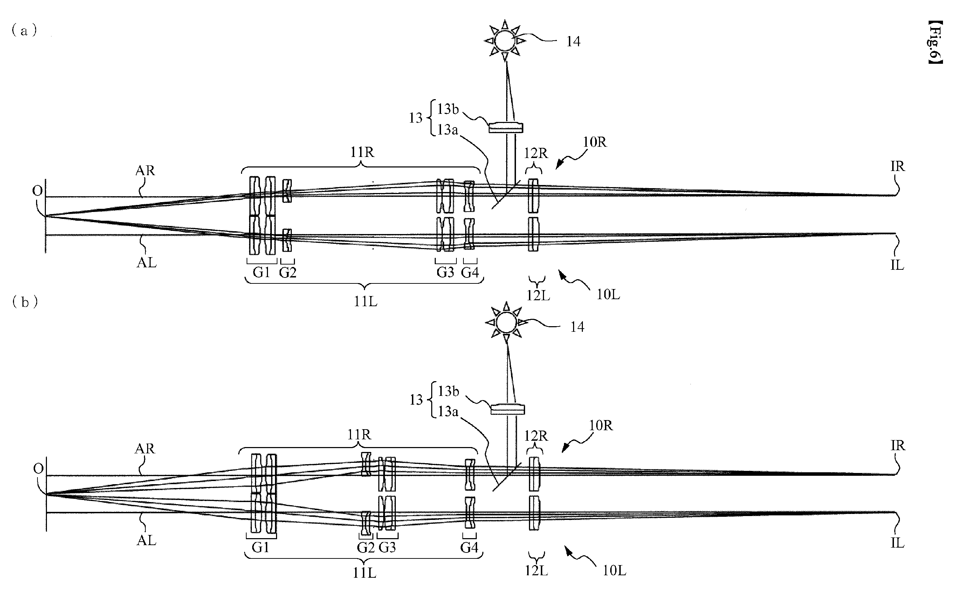

Note that the substantially parallel luminous fluxes emitted from variable power optical systems 11R and 11L are finally collected by imaging lenses 12R and 12L, and are imaged as images IR and IL, respectively. Because the respective reference optical axes AR and AL of the right and left optical systems can be made parallel to each other, as illustrated in Figures 6, an illumination optical system 13 can be inserted into this parallel luminous flux portion. The illumination optical system 13 illustrated in Figures 6 includes: a half mirror (or a half prism) 13a arranged between the variable power optical system 11R and the imaging lens 12R of the right-eye imaging optical system 10R; and a collecting lens 13b that collects light from a light source 14 into the substantially parallel luminous flux. Accordingly, the light emitted from the light source 14 is converted into a substantially parallel luminous flux by the collecting lens 14b to enter the half mirror 13a, is reflected on the half mirror 13a to be guided to the variable power optical system 11R, and is radiated to the object O through the variable power optical system 11R. Similarly to the stereoscopic microscope apparatus described in the present embodiment, in the conventional inwardly inclined system stereoscopic microscope apparatus including the right and left optical systems independent of each other, the illumination optical system needs to be attached on the object side with respect to the variable power optical system in order to achieve coaxial epi-illumination, so that the working distance is unfavorably short. To solve this problem, if part (for example, the second lens group G2) of the variable power lens groups of the variable power optical system 11R is moved in the direction including the component perpendicular to the optical axis, the respective reference optical axes AR and AL of the right and left optical systems can be made parallel to each other similarly to the optical systems of the parallel stereoscopic microscope apparatus. Hence, the degree of freedom in the arrangement of the illumination optical system is increased, and an influence on the working distance can be eliminated.

In this way, according to the stereoscopic microscope apparatus of the first embodiment illustrated in Figures 5 and Figures 6, it is possible to: arrange the reference optical axes of the right and left optical systems parallel to each other while maintaining the advantages of the inwardly inclined system stereoscopic microscope apparatus including the right-eye and left-eye optical paths completely independent of each other; provide as high system extensibility as that of the parallel stereoscopic microscope apparatus; and enhance the optical performance of the entire field of view. As a result, the mechanical structure can be smaller and simpler. In addition, the parallel stereoscopic microscope can be advantageously used in common with various intermediate apparatuses and the lens barrel.

Hereinafter, a specific configuration example of the imaging optical system 10 (10R and 10L) is described. Note that each lens has a thickness in reality, but only behaviors of a ray entering the lens and a ray coming out of the lens are considered as effects of the lens, and, in theory, the lens can be replaced with a thin lens having a negligibly small thickness. Particularly in the variable power optical system, because the number of lenses constituting each lens group is small, each lens group can easily approximate a thin lens. Hence, in general, in the state where each lens group is replaced with the thin lens, an optimal focal length and the arrangement of each lens group are determined so as to suit specifications. Similarly to such an example as described above, description is given below of the variable power optical system 11 of the imaging optical system 10, in which each lens group is replaced with a thin lens. In addition, information (for example, the radius of curvature of lenses constituting each lens group) other than the focal length and arrangement of each lens group is not related to the essence of the imaging optical system 10, and thus is omitted.

As described with reference to Figures 4, the variable power optical system 11 constituting the imaging optical system 10 according to the present embodiment is a typical variable power optical system formed of four groups of: the first lens group G1 having a positive refractive power; the second lens group G2 having a negative refractive power; the third lens group G3 having a positive refractive power; and the fourth lens group G4 having a negative refractive power, in the stated order from the object O side. Further, at the time of changing the magnifying power from the low-power end state to the high-power end state, the second lens group G2 moves in a fixed direction from the object side to the image side, and the third lens group G3 moves in a fixed direction from the image side to the object side. That is, the second lens group G2 and the third lens group always move only in the fixed direction, and do not move in the reverse direction during a power changing operation. In such a zooming type, data is given below of the case where the second lens group G2 is moved in the direction including the component perpendicular to the reference optical axis A of the imaging optical system 10 during the power changing operation, whereby the image position of the off-axis object point 02 is corrected onto the reference optical axis A.

Table 1 given below shows data of the imaging optical system 10 according to the first embodiment. Note that, in Table 1, β represents the zoom power of the variable power optical system 11, f1 represents the focal length of the first lens group G1, f2 represents the focal length of the second lens group G2, f3 represents the focal length of the third lens group G3, and f4 represents the focal length of the fourth lens group G4. In addition, d0 represents a distance along the reference optical axis A between the object O and the apex of a lens closest to the object in the first lens group G1, d1 represents a distance on the reference optical axis A between the first lens group G1 and the second lens group G2, d2 represents a distance on the reference optical axis A between the second lens group G2 and the third lens group G3, and d3 represents a distance on the reference optical axis A between the third lens group G3 and the fourth lens group G4. Further, ε (reference optical axis) represents the amount of decentering of the reference optical axis A with respect to the object, and ε (G2) represents the amount of decentering of the second lens group G2 with respect to the reference optical axis A. The amounts of decentering here are expressed assuming that the upward direction (the direction indicated by an arrow E) in Figures 4 is positive. For the distances d1 to d3 between the first to fourth lens groups G1 to G4 and the amount of decentering ε (G2), Table 1 shows values at the low-power end and the high-power end and values at magnifying powers of 0.63x, 1.26x, 2.52x, and 5.04x. These explanations of the reference signs are applied to the subsequent embodiments as well.

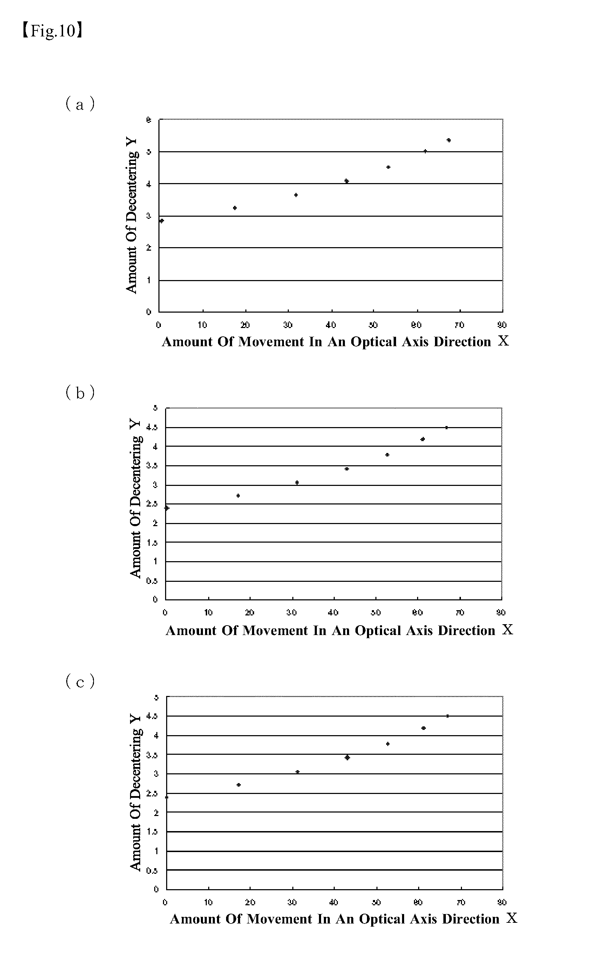

In addition, Figure 10(a) is a graph in which the decentering trajectory of the second lens group G2 with respect to the reference optical axis A is plotted in the power changing section from the low-power end state to the high-power end state. In the power changing section from the low-power end state to the high-power end state, the decentering trajectory of the second lens group G2 with respect to the reference optical axis A is not a linear trajectory. Assuming that an amount of movement X of the second lens group G2 in the optical axis direction is a horizontal axis and that an amount of decentering Y of the second lens group G2 from the optical axis is a vertical axis, the trajectory is expressed by a function of Y = f(X). At this time, the second order differential by X of the function f(X) is positive.

Further, the focal lengths of the imaging lenses 12R and 12L are set to 200. Here, description is given assuming that the focal length, the interval (distance), the amount of decentering, and other such units of length are "mm" unless otherwise specified, but the optical system can have the same optical performance even if the optical system is proportionally enlarged or proportionally reduced. Hence, the units are not limited to "mm". These explanations of the data table are applied to the subsequent embodiments as well.

**(Table 1)**

| | | | | |
|---|---|---|---|---|
| β = 8x | | | | |
| f1 = 67.73 | | | | |
| f2 = -41.33 | | | | |
| f3 = 52.31 | | | | |
| f4 = -64.50 | | | | |
| d0 = 127.5 | | | | |

| Low-Power End High-Power End | | | | |
|---|---|---|---|---|
| d1 | 0.4407 | | 67.3893 | |
| d2 | 112.0325 | | 7.0315 | |
| d3 | 10.9750 | | 49.0274 | |
| | | | | |
| | 0.63x | 1.26x | 2.52x | 5.04x |
| d1 | 0.4407 | 31.7298 | 53.2646 | 7.3893 |
| d2 | 112.0325 | 71.56028 | 37.4426 | 7.0315 |
| d3 | 10.975 | 20.1581 | 32.7416 | 49.0274 |
| Amount of Decentering of Reference Optical Axis with respect to Object | | | | |
| ε(Reference Optical Axis) = 8.8 | | | | |
| | | | | |
| Amount of Decentering of Second Lens Group with respect to Reference Optical Axis | | | | |

| Low-Power End High-Power End | | | | |
|---|---|---|---|---|
| ε(G2) | 2.8510 | | 5.3688 | |
| | | | | |
| | 0.63x | 1.26x | 2.52x | 5.04x |
| ε(G2) | 2.8510 | 3.6512 | 4.5233 | 5.3688 |

### [Second Embodiment]

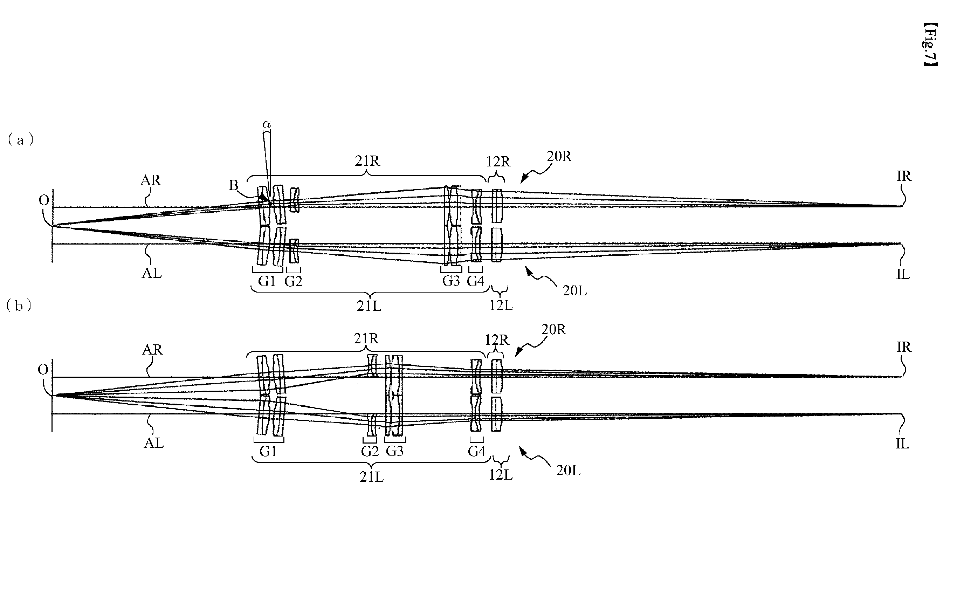

In the first embodiment described above, the second lens group G2 constituting the variable power optical system 11 of the imaging optical system 10 is decentered, whereby a luminous flux emitted from the variable power optical system 11 is made parallel to the reference optical axis A. Further, as in imaging optical systems 20R and 20L illustrated in Figures 7, only the optical axis of the first lens group G1 constituting each of variable power optical systems 21R and 21L is inclined toward the object O with respect to the reference optical axis A, that is, is inclined with respect to a normal to an observation surface of the object O (object surface). As a result, the amount of decentering of the second lens group G2 is reduced, so that the imaging optical systems 20R and 20L can each have a more compact configuration. Specifically, the first lens group G1 is turned about an axis B perpendicular to planes respectively including reference optical axes AR and AL of the two imaging optical systems 20R and 20L arranged side by side, by α degrees (assuming that a clockwise turn is positive). Note that, in the second embodiment, description is given of the case where the entire first lens group G1 is turned about the axis B, but at least one of lenses constituting the first lens group G1 may be turned. Further, a similar effect can be obtained by turning the entirety or part of the other lens groups (the second, third, and fourth lens groups G2, G3, and G4). In addition, in Figures 7, the same components as those of the first embodiment are denoted by the same reference signs, and detailed description thereof is omitted.

Table 2 given below shows data of the imaging optical system 20 according to the second embodiment. Note that, also in the second embodiment, the focal lengths of the imaging lenses 12R and 12L are set to 200.

In addition, Figure 10(b) is a graph in which the decentering trajectory of the second lens group G2 with respect to the reference optical axis A is plotted in the power changing section from the low-power end state to the high-power end state. In the power changing section from the low-power end state to the high-power end state, the decentering trajectory of the second lens group G2 with respect to the reference optical axis A is not a linear trajectory. Assuming that the amount of movement X of the second lens group G2 in the optical axis direction is a horizontal axis and that the amount of decentering Y of the second lens group G2 from the optical axis is a vertical axis, the trajectory is expressed by a function of Y = f(X). At this time, the second order differential by X of the function f(X) is positive.

**(Table 2)**

| | | | | |
|---|---|---|---|---|
| β = 8x | | | | |
| f1 = 56.9411 | | | | |
| f2 = -27.7402 | | | | |
| f3 = 32.7880 | | | | |
| f4 = -46.0593 | | | | |
| d0 = 127.5 | | | | |
| | | | | |

| | Low-Power End | | High-Power End | |
|---|---|---|---|---|
| d1 | 7.2803 | | 51.1030 | |
| d2 | 68.4085 | | 0.6055 | |
| d3 | 1.0890 | | 25.0693 | |
| | | | | |
| | 0.63x | 1.26x | 2.52x | 5.04x |
| d1 | 7.2803 | 27.7278 | 41.8440 | 51.1030 |
| d2 | 68.4085 | 42.1777 | 20.0978 | 0.6055 |
| d3 | 1.0890 | 6.8723 | 14.8360 | 25.0693 |
| Amount of Decentering of Reference Optical Axis with respect to Object | | | | |
| ε(Reference Optical Axis) = 8.8 | | | | |
| | | | | |
| Angle of Turning of First Lens Group with respect to Reference Optical Axis | | | | |
| α = -1.4182 | | | | |
| | | | | |
| Amount of Decentering of Second Lens Group with respect to Reference Optical Axis | | | | |

| | Low-Power End | | High-Power End | |
|---|---|---|---|---|
| ε(G2) | 2.4232 | | 4.5000 | |
| | | | | |
| | 0.63x | 1.26x | 2.52x | 5.04x |
| ε(G2) | 2.4232 | 3.0863 | 3.8069 | 4.5000 |

### [Third Embodiment]

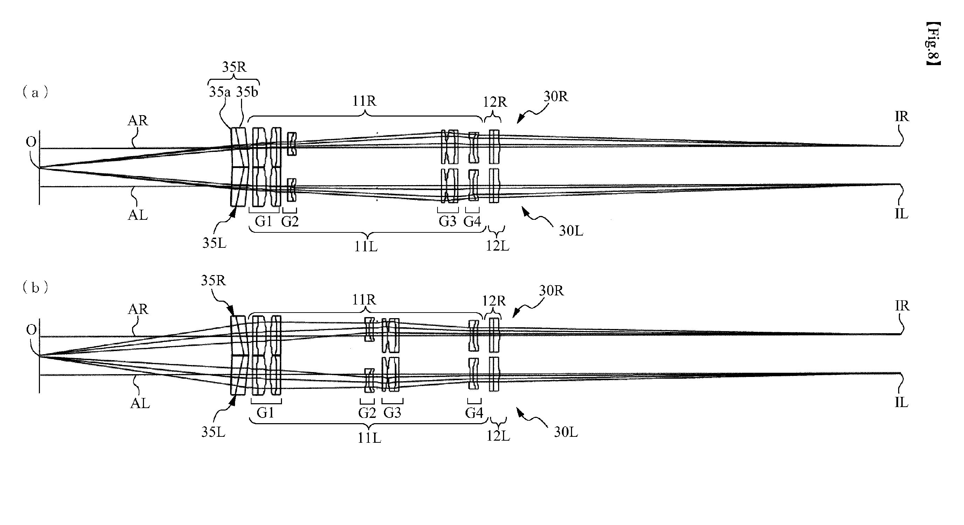

As has been described above, if a luminous flux is made parallel to a reference optical axis by means of only a deflection angle prism, it is significantly difficult to configure an optical system. As in an imaging optical system 30 illustrated in Figures 8, deflection angle prisms 35R and 35L are respectively inserted between the object O and the variable power optical systems 11R and 11L, and the second lens group G2 is decentered. As a result, required deflection angles of the deflection angle prisms 35R and 35L and the amount of decentering of the second lens group G2 are both reduced, so that the optical system can have a simpler configuration. In addition, the deflection angle prisms 35R and 35L each have a structure obtained by attaching two types of glass, that is, a first prism 35a and a second prism 35b to each other. As described above, because the deflection angle prisms 35R and 35L each have the structure obtained by attaching the two types of glass to each other, the occurrence of aberration can be suppressed. Note that, in the third embodiment, the deflection angle prisms 35R and 35L are respectively added to the imaging optical systems 10R and 10L according to the first embodiment, but the deflection angle prisms 35R and 35L may be added to the imaging optical system 20 according to the second embodiment, that is, may be added to the configuration in which the optical axis of the first lens group G1 is inclined toward the object. Note that, also in Figures 8, the same components as those of the first embodiment are denoted by the same reference signs, and detailed description thereof is omitted.

Table 3 given below shows data of the imaging optical system 30 according to the third embodiment. It is assumed that the deflection angles of the respective surfaces of the attached deflection angle prisms 35R and 35L are α, β, and γ in the stated order from the object side. In addition, the focal lengths of the imaging lenses 12R and 12L are set to 200.

In addition, Figure 10(c) is a graph in which the decentering trajectory of the second lens group G2 with respect to the reference optical axis A is plotted in the power changing section from the low-power end state to the high-power end state. In the power changing section from the low-power end state to the high-power end state, the decentering trajectory of the second lens group G2 with respect to the reference optical axis A is not a linear trajectory. Assuming that the amount of movement X of the second lens group G2 in the optical axis direction is a horizontal axis and that the amount of decentering Y of the second lens group G2 from the optical axis is a vertical axis, the trajectory is expressed by a function of Y = f(X). At this time, the second order differential by X of the function f(X) is positive.

| (Table 3) | | | | |
|---|---|---|---|---|
| β = 8x | | | | |
| f1 = 67.0868 | | | | |
| f2 = -40.9593 | | | | |
| f3 = 51.9117 | | | | |
| f4 = -64.3239 | | | | |
| d0 = 127.5 | | | | |
| | | | | |

| | Low-Power End | | High-Power End | |
|---|---|---|---|---|
| d1 | 0.1504 | | 66.7184 | |
| d2 | 111.4181 | | 7.0000 | |
| d3 | 10.5285 | | 48.3787 | |
| | | | | |
| | 0.63x | 1.26x | 2.52x | 5.04x |
| d1 | 0.1504 | 31.2300 | 52.6363 | 66.7184 |
| d2 | 111.4181 | 71.2292 | 37.3318 | 7.0000 |
| d3 | 10.5285 | 19.6379 | 32.1291 | 48.3787 |
| | | | | |
| Amount of Decentering of Reference Optical Axis with respect to Object | | | | |
| ε(Reference Optical Axis) = 8.8 | | | | |
| | | | | |
| Amount of Decentering of Second Lens Group with respect to Reference Optical Axis | | | | |

| | Low-Power End | | High-Power End | |
|---|---|---|---|---|
| ε(G2) | 2.3877 | | 4.5000 | |
| | | | | |
| | 0.63x | 1.26x | 2.52x | 5.04x |
| ε(G2) | 2.3877 | 3.0577 | 3.7885 | 4.5000 |

Configuration of Prism inserted between Object and Variable Power Optical System
First Prism Refractive Index=1.49782 Abbe number=82.5 Thickness=1.5
Second Prism Refractive Index=1.75520 Abbe number=27.5 Thickness=1.5
α = -2.4431
β = -4.3742
γ = -3.9314

Note that, in the above description, the imaging lens and the variable power optical system are provided separately from each other, but the lens group closest to the image in the variable power optical system may be provided with a function of the imaging lens, and the imaging lens thus can be omitted. In addition, an inwardly inclined system stereoscopic microscope apparatus can be exemplified as a stereoscopic microscope apparatus not including an objective lens common to right and left optical paths similarly to the present embodiments. In the inwardly inclined system stereoscopic microscope apparatus, however, the objective lens common to the right and left optical paths may be attached for special purposes, for example, in the case where an working distance longer than a standard distance is necessary. Although not described in the present embodiments, the objective lens common to the right and left optical paths can be attached for similar purposes.

In addition, the decentering trajectory of the second lens group G2 with respect to the reference optical axis A in the imaging optical system of the present embodiments is not a linear trajectory, but can be a linear trajectory in consideration of the convenience of production. Unfortunately, in this case, the degree of freedom in the trajectory is lower, and hence the optical performance decreases.

### Reference Signs List

- 10R, 10L, 20R, 20L, 30R, 30L: imaging optical system
- G1: first lens group
- G2: second lens group
- G3: third lens group
- G4: fourth lens group
- 35R, 35L: deflection angle prism
- 100: stereoscopic microscope apparatus

## Claims

1. An imaging optical system that forms an image of an object arranged at a position outside of an optical axis, onto the optical axis, and variably magnifies the image,
the imaging optical system comprising a plurality of lens groups, wherein
at least one lens group of the plurality of lens groups is arranged such that a center thereof deviates by a predetermined amount in a direction perpendicular to the optical axis, and
the at least one lens group moves in a direction including a component perpendicular to the optical axis, in at least part of a power changing section from a high-power end state to a low-power end state.

2. The imaging optical system according to claim 1, wherein
an optical axis of at least one lens group of the plurality of lens groups or an optical axis of at least one of lenses constituting the lens groups is inclined with respect to a normal to a surface of the object.

3. The imaging optical system according to claim 1 or 2, further comprising a deflection angle prism.

4. The imaging optical system according to claim 3, wherein
the deflection angle prism is a prism obtained by attaching two or more types of glass to each other.

5. A microscope apparatus comprising two or more imaging optical systems that form images of an object viewed in different directions, wherein
at least one of the imaging optical systems is configured by the imaging optical system according to any one of claims 1 to 4.

6. The microscope apparatus according to claim 5, wherein
optical axes of the two or more imaging optical systems are arranged so as to be, at least partially, substantially parallel to each other.

7. The microscope apparatus according to claim 5 or 6, wherein
an objective lens common to the two or more imaging optical systems is attachable.
